# EUROPEAN PATENT APPLICATION

(11) **EP 4 837 942 A1**
(43) Date of publication of application: **11.11.2026**
(21) Application number: 25747426.2
(22) Date of filing: 03.01.2025
(51) Int. Cl.: C09J 133/08, C09J 133/10, C09J 133/12

(54) **POLYMER, SEPARATOR, BATTERY, AND ELECTRIC DEVICE**

(30) Priority: 02.02.2024 CN 202410155277
(71) Applicant: Contemporary Amperex Technology Co., Limited, Ningde, Fujian 352100 (CN)
(72) Inventor: LI, Lei, Ningde, Fujian 352100 (CN); ZHENG, Yi, Ningde, Fujian 352100 (CN); KANG, Haiyang, Ningde, Fujian 352100 (CN); SUN, Chengdong, Ningde, Fujian 352100 (CN); LAI, Runhao, Ningde, Fujian 352100 (CN); CHEN, Meihuang, Ningde, Fujian 352100 (CN)
(74) Representative: Lorenz Seidler Gossel Part. mbB
(86) International application number: PCT/CN2025/070582
(87) International publication number: WO 2025/161850

(57) **Abstract**

The present invention provides a polymer, a separator, a battery, and an electric device. The polymer comprises a first polymer and a second polymer, the Dv50 particle size of the first polymer is greater than the Dv50 particle size of the second polymer, and the first polymer comprises an acrylate copolymer.

## Description

### TECHNICAL FIELD

The present disclosure relates to the technical field of batteries, and in particular, to a polymer, a separator, a battery, and an electric device.

### BACKGROUND

In recent years, batteries have been widely used in energy storage power systems such as hydropower, thermal power, wind power, and solar power stations, as well as in various fields such as electric tools, electric bicycles, electric motorcycles, electric vehicles, military equipment, and aerospace. A battery includes a positive electrode plate, a negative electrode plate, and a separator. A binder is an inactive material in the battery, and can bond the components in the battery, as well as adjacent parts, together. For example, by disposing a bonding layer on the surface of the separator, the separator and the electrode plates are closely bonded by the binder, and the positive electrode plate, the negative electrode plate, and the separator bonded together are attached to each other and supported by each other to form a structure with a certain thickness, such that the battery has a certain hardness. However, there are still many problems during the actual application of polymer binders currently applied to separators, and further improvement is required.

It should be noted that the above statements are only used to provide background information related to the present application and do not necessarily constitute the prior art.

### SUMMARY

In a first aspect of the present application, the present application provides a polymer. The polymer includes: a first polymer and a second polymer, where a Dv50 particle size of the first polymer is greater than a Dv50 particle size of the second polymer, and the first polymer includes an acrylate copolymer. Therefore, by compounding the first polymer having a large particle size with the second polymer having a small particle size, the above polymer has a good bonding effect when used as a binder on a separator.

In some embodiments, the monomers of the acrylate copolymer include a first monomer, a second monomer, and a third monomer, and the monomers of the acrylate copolymer meet at least one of the following conditions: the first monomer includes at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trifluoroethyl methacrylate, trimethylolpropane triacrylate, 2-hydroxyethyl acrylate, 2-hydroxypropyl acrylate, 2-hydroxyethyl methacrylate, and 2-hydroxypropyl methacrylate; the second monomer includes at least one of acrylonitrile, methacrylonitrile, ethacrylonitrile, acrylic acid, methacrylic acid, crotonic acid, heptenoic acid, itaconic acid, and maleic acid; and the third monomer includes at least one of acrylamide, N-hydroxymethyl acrylamide, and N-butoxymethylacrylamide. Therefore, the glass transition temperature of the first polymer can be lowered, such that the polymer can be suitable for a cold pressing process.

In some embodiments, the monomers of the acrylate copolymer meet at least one of the following conditions: the first monomer includes at least one of ethyl acrylate, n-butyl acrylate, n-propyl acrylate, isobutyl acrylate, sec-butyl acrylate, tert-butyl acrylate, isooctyl acrylate, methyl acrylate, methyl methacrylate, ethyl methacrylate, n-butyl methacrylate, 2-ethylhexyl methacrylate, and isobornyl methacrylate; the second monomer includes at least one of acrylonitrile, methacrylonitrile, acrylic acid, and methacrylic acid; and the third monomer includes at least one of acrylamide and N-hydroxymethyl acrylamide. Therefore, the glass transition temperature of the first polymer can be lowered, such that the polymer can be suitable for a cold pressing process.

In some embodiments, the second polymer includes an acrylate copolymer. Therefore, the first polymer and the second polymer are both acrylate copolymers, the compatibility between the two is good, and the bonding performance of the polymer is good.

In some embodiments, the first polymer has a Dv50 particle size of 6 µm to 12 µm, and the second polymer has a Dv50 particle size of 0.8 µm to 1.5 µm. Therefore, the compounding effect of the first polymer and the second polymer is good.

In some embodiments, the polymer has a storage modulus of 100 MPa to 800 MPa. Therefore, the stress rebound of the polymer after pressure application can be reduced.

In some embodiments, the second polymer includes at least one of a polyvinyl fluoride polymer and a polyvinylidene fluoride polymer. Therefore, the high-temperature resistance of the polymer can be improved.

In some embodiments, the polyvinyl fluoride polymer includes at least one of polytetrafluoroethylene, polychlorotrifluoroethylene, and polyvinyl fluoride; and/or the polyvinylidene fluoride polymer includes at least one of polyvinylidene fluoride, a vinylidene fluoride-trifluoroethylene copolymer, a vinylidene fluoride-hexafluoropropylene copolymer, a vinylidene fluoride-trifluoroethylene-hexafluoropropylene copolymer, a vinylidene fluoride-hexafluoropropylene-acrylic acid copolymer, and a vinylidene fluoride-hexafluoropropylene-acrylate copolymer. Therefore, the high-temperature resistance of the polymer can be further improved.

In some embodiments, the polyvinylidene fluoride polymer includes at least one of polyvinylidene fluoride and a vinylidene fluoride-hexafluoropropylene copolymer. Therefore, the high-temperature resistance of the polymer can be further improved.

In some embodiments, the first polymer has a Dv50 particle size of 5 µm to 10 µm, and the second polymer has a Dv50 particle size of 0.5 µm to 4 µm. Therefore, the high-temperature resistance of the polymer can be improved.

In some embodiments, the polymer has a storage modulus of 300 MPa to 1500 MPa. Therefore, the stress rebound of the polymer after pressure application can be reduced.

In some embodiments, the first polymer in the polymer has a mass fraction of 50% to 90%, and the second polymer in the polymer has a mass fraction of 10% to 50%. Therefore, the first polymer and the second polymer can jointly improve the adhesion of the polymer.

In a second aspect of the present application, the present application provides a separator. The separator includes the above polymer. Therefore, the separator has all the features and advantages of the above polymer, which will not be repeated herein.

In a third aspect of the present application, the present application provides a battery. The battery includes the above separator. Therefore, the battery has all the features and advantages of the above separator, which will not be repeated herein.

In a fourth aspect of the present application, the present application provides an electric device. The electric device includes the above battery. Therefore, the electric device has all the features and advantages of the above battery, which will not be repeated herein.

### BRIEF DESCRIPTION OF THE DRAWINGS

The above and/or additional aspects and advantages of the present application will become apparent and readily understood from the description of embodiments in conjunction with the drawings below, in which:
FIG. 1 is a schematic structural diagram of a battery according to one embodiment of the present application;
FIG. 2 is a schematic diagram of a battery cell according to one embodiment of the present application;
FIG. 3 is an exploded view of the battery cell according to one embodiment of the present application shown in FIG. 2;
FIG. 4 is a schematic diagram of a battery module according to one embodiment of the present application;
FIG. 5 is a schematic diagram of a battery pack according to one embodiment of the present application;
FIG. 6 is an exploded view of the battery pack according to one embodiment of the present application shown in FIG. 5; and
FIG. 7 is a schematic diagram of an electric device using a battery as a power source according to one embodiment of the present application.

Description of the reference numerals:
1 battery pack; 2 upper case body; 3 lower case body; 4 battery module; 5 battery cell;
11 negative electrode current collector; 12 negative electrode active material layer; 21 positive electrode current collector; 22 positive electrode active material layer; 31 base film; 32 polymer; 51 housing; 52 electrode assembly; 53 top cover assembly.

### DETAILED DESCRIPTION

Embodiments of the present application are described in detail below, with examples of the embodiments illustrated in the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

Unless otherwise defined, all technical and scientific terms used in the present application have the same meaning as commonly understood by those skilled in the art to which the present application belongs. The terms used in the present application are only used to describe specific embodiments and are not intended to limit the present application. Unless otherwise specified, the values of the parameters mentioned in the present application can be measured by various measurement methods commonly used in the art (for example, they can be tested according to the methods given in the embodiments of the present application).

The terms "include", "comprise", "have", "provided with", and any variants thereof in the specification and claims of the present application are intended to be open-ended expressions, that is, they encompass the elements specified in the present application but do not exclude other elements.

In the description of the present application, whether or not the word "about" or "approximately" is used, all numbers disclosed herein are approximate values. The value of each number may have a difference of 10% or less or a reasonable difference considered by those skilled in the art, such as 1%, 2%, 3%, 4%, or 5%.

The "ranges" disclosed in the present application are defined by lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

In the description of the present application, the terms "first" and "second" are used for description only and are not to be construed as indicating or implying relative importance or implicitly specifying the number of technical features indicated. "First feature" and "second feature" may include one or more of such features.

In the description of the present application, "A and/or B" may include any of the following cases: A alone, B alone, and A and B, where A and B are only used for examples, and they may refer to any technical features connected by "and/or" as used in the present application.

In the description of the present application, "identical chemical compositions" should be understood in a broad sense, that is, the main components of the two have identical chemical compositions, or the chemical compositions of the two are substantially identical, with permissible variations or impurities within the range understandable to those skilled in the art.

In the present application, the order in which the steps are described does not imply a strict execution sequence that imposes any limitation on the implementation process. The specific order of execution for the steps should be determined based on their functionality and potential internal logic. Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Typically, a battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts active ions between the positive electrode plate and the negative electrode plate. The separator is disposed between the positive electrode plate and the negative electrode plate to primarily prevent the positive and negative electrodes of the battery from short-circuiting while allowing the passage of ions. The negative electrode plate will undergo volume expansion and volume contraction during the charging and discharging process of the battery. When the bonding force between the separator and the electrode plates is weak, gaps will be formed between the positive electrode plate, the negative electrode plate, and the separator due to expansion and contraction, resulting in that the positive electrode plate, the negative electrode plate, and the separator cannot be attached to each other and supported by each other, finally causing the battery to be loose, the hardness to be low, and the internal resistance to be significantly increased, thus causing the cycle performance of the battery to be significantly reduced. Therefore, improving the bonding effect between the separator and the electrode plates is critical to improving the cycle performance of the battery.

A polymer binder currently applied to a separator usually has a unimodal particle size distribution. The polymer binder with a unimodal particle size distribution has a narrow particle size distribution, and the particle sizes of the polymer particles are relatively close, such that there are many unfilled voids between the polymer particles, the bulk density of the polymer particles is low, the number of contact sites per unit area cannot be effectively increased, and the bonding performance of the polymer is poor. In addition, there may be a problem of too few contact sites due to excessively small particle sizes of the polymer particles, and a problem of stress rebound after pressure application due to excessively large particle sizes of the polymer particles. The stress rebound will lead to a gap or even complete detachment between the separator and an adjacent electrode plate, resulting in a significant decrease in the number of effective contact sites per unit area and a decrease in the bonding performance.

An acrylate copolymer has a relatively low glass transition temperature, and can be suitable for a cold pressing process. In order to provide certain structural strength and a good embedding effect with the electrode plates, the particle size of the acrylate copolymer used needs to be large, but an excessively large particle size will lead to a small number of contact sites per unit area, and the bonding performance cannot be further improved.

In the present application, an acrylate polymer is used as a first polymer, and the acrylate polymer has good bonding performance, lower manufacturing cost, and good electrolytic solution wettability. By compounding a first polymer having a large particle size with a second polymer having a small particle size, the second polymer can fully fill the voids between the first polymers, such that the polymer reaches the maximum bulk density. When the above polymer is used as a binder on the separator, for example, as a binder on a surface of a base film, the number of effective contact sites per unit area can be increased in the process of pressing and bonding the electrode plate and the separator, and the generation of holes due to failure to form effective contact sites can be reduced. Therefore, the binder on the separator can better wet the surface layer structure of the electrode plate, and a mechanical linkage effect occurs between the separator and the electrode plate, such that the polymer as a whole achieves a better embedding effect. At the same time, the second polymer filling the voids between the first polymers can also reduce the stress rebound of the polymer as a whole after pressure application, such that the bonding effect after pressure application is maintained, and the battery also has a high hardness and large clamp cycle performance.

The hardness of the battery is affected by the bonding force between the separator and the electrode plate. Specifically, if the bonding force between the separator and the electrode plate is good and no rebound occurs, the overall hardness of the battery is good; if the bonding force between the separator and the electrode plate is poor, the binder on the separator and the electrode plate cannot be well embedded, and the battery exhibits problems such as a soft cell and an opening.

The large clamp cycle performance of the battery is also affected by the bonding force between the separator and the electrode plate. Specifically, the electrode plate will undergo cyclic expansion during the transmission of lithium ions. When the bonding force between the separator and the electrode plate is good, the bonding between the electrode plate and the separator will be more stable, reducing the occurrence of adverse phenomena such as detachment between the separator and the electrode plate, and maintaining the stability of lithium ion transmission. When the bonding force between the separator and the electrode plate is poor, the cycle performance of the battery will deteriorate.

A cold pressing process refers to a process in which wound cells are shaped at an ambient temperature lower than that of a hot pressing process, such that the elasticity of the cells is reduced, and the qualification rate of mounted cells and the consistency of the thickness of finished cells are improved. Compared with the hot pressing process, the cold pressing process offers better process consistency and production efficiency.

In some embodiments, both the first polymer and the second polymer may be acrylate polymers. In this case, the first polymer and the second polymer are the same or similar in substance, and the Dv50 particle size of the second polymer is smaller than the Dv50 particle size of the first polymer, that is, the particle sizes of the first polymer and the second polymer are different.

In some embodiments, the first polymer may be an acrylate copolymer, and the Dv50 particle size of the acrylate copolymer is large. The second polymer may be a polyvinyl fluoride polymer and/or a polyvinylidene fluoride polymer, and the Dv50 particle size of the polyvinyl fluoride polymer and the polyvinylidene fluoride polymer is small. In this case, the particle size of the second polymer is smaller than the particle size of the first polymer, that is, the particle sizes and substances of the first polymer and the second polymer are different.

Swelling of the polymer causes problems such as accelerated volume expansion and electrode pulverization during the charging and discharging process of the battery, further increasing the alternating-current impedance of the electrode, accelerating the reversible capacity attenuation, and worsening cycling stability.

In some embodiments, the separator may include a base film and a polymer located on at least one side of the base film. In some other embodiments, the polymer may be located on two opposite side surfaces of the base film.

In a first aspect of the present application, the present application provides a polymer. The polymer includes: a first polymer and a second polymer, where a Dv50 particle size of the first polymer is greater than a Dv50 particle size of the second polymer, and the first polymer includes an acrylate copolymer. When the above polymer is used as a binder on the separator, by compounding the first polymer having a large particle size with the second polymer having a small particle size, the second polymer having a small particle size fills the voids between the first polymers having a large particle size, thereby increasing the contact sites between the polymer and adjacent structures per unit area, and achieving a good bonding effect.

In some embodiments, the monomers of the acrylate copolymer include a first monomer, a second monomer, and a third monomer. Therefore, the glass transition temperature of the first polymer can be lowered, such that the polymer can be suitable for a cold pressing process.

In some embodiments, the first monomer includes at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trifluoroethyl methacrylate, trimethylolpropane triacrylate, 2-hydroxyethyl acrylate, 2-hydroxypropyl acrylate, 2-hydroxyethyl methacrylate, and 2-hydroxypropyl methacrylate.

During the manufacturing process of the battery, a hot pressing process or a cold pressing process needs to be performed to enable the separator and the electrode plate to be tightly bonded. In order to achieve the speed increase and energy reduction of the battery production line, the hot pressing process is gradually replaced by the cold pressing process to improve the bonding force between the electrode plate and the separator by means of the original battery process. The cold pressing process refers to a process of shaping wound cells to reduce the elasticity of the cells and improve the qualification rate of mounted cells and the consistency of the thickness of finished cells. Due to the low ambient temperature of the cold pressing process, a binder with a low glass transition temperature is required to achieve effective bonding between the electrode plate and the separator.

The first monomer includes an unsaturated ester group, which is beneficial to the polymerization of the monomer, such that the acrylate copolymer has excellent stability and good adhesion, and the ester group of the first monomer can improve the swelling resistance of the polymer. The soft monomer and the hard monomer in the first monomer can further adjust the glass transition temperature of the polymer by polymerization, which helps to adjust the glass transition temperature of the polymer within a proper range, such that the acrylate copolymer has a relatively low glass transition temperature, and thus can be used as a binder in the cold pressing process.

The use of any one or more of the above first monomers can adjust the bonding performance and the swelling resistance of the acrylate copolymer.

In some embodiments, the first monomer includes at least one of ethyl acrylate, n-butyl acrylate, n-propyl acrylate, isobutyl acrylate, sec-butyl acrylate, tert-butyl acrylate, isooctyl acrylate, methyl acrylate, methyl methacrylate, ethyl methacrylate, n-butyl methacrylate, 2-ethylhexyl methacrylate, and isobornyl methacrylate.

In some embodiments, the second monomer includes at least one of acrylonitrile, methacrylonitrile, ethacrylonitrile, acrylic acid, methacrylic acid, crotonic acid, heptenoic acid, itaconic acid, and maleic acid.

The second monomer contains an unsaturated double bond, which is beneficial to the polymer of the monomer, and also has a carboxyl functional group and/or a cyano functional group. The carboxyl group and the cyano group can not only form a binding force with the functional group on the base film, improve the adhesion performance between the acrylate copolymer and the base film, but also improve the crosslinking active site of the acrylate copolymer, thereby improving the creep resistance and the cohesion strength of the acrylate copolymer.

In some embodiments, the second monomer includes at least one of acrylonitrile, methacrylonitrile, acrylic acid, and methacrylic acid.

In some embodiments, the third monomer includes at least one of acrylamide, N-hydroxymethyl acrylamide, and N-butoxymethylacrylamide.

The structure of the third monomer includes an unsaturated amide group, which is beneficial to the polymerization of the monomer. This type of monomer can play a role in adjusting the molecular weight, and also has good adhesion and swelling resistance.

The molecular weight of the acrylate copolymer is within a certain range to help improve the adhesion, and the use of any one or more of the third monomers can play a role in adjusting the molecular weight, thereby adjusting the molecular weight of the acrylate copolymer.

In some embodiments, the third monomer includes at least one of acrylamide and N-hydroxymethyl acrylamide.

The test of ester group, carboxyl group, acrylamide group, carbonyl group, amide group, and cyano group in an organic polymer structure is carried out according to the national standard GB/T 6040-2002 "General Rules for Infrared Analysis". A sample is compressed into a KBr pellet by a pellet transmission method, and the KBr background blank is subtracted by the transmission method to obtain a sample test spectrum (resolution: 4 cm⁻¹, wavenumber range: 400 cm⁻¹ - 4000 cm⁻¹).

In some embodiments, the second polymer includes an acrylate copolymer.

When the first polymer and the second polymer are both acrylate copolymers, manufacturing costs of the first polymer and the second polymer are low, and the compatibility between the first polymer and the second polymer is good. When the first polymer and the second polymer are used as a binder on the surface of the base film, the mixing effect of the two is good, and the second polymer having a small particle size can better fill the voids of the first polymer having a large particle size, thereby increasing the bulk density of the polymer, such that the polymer has good bonding performance in both a hot pressing process and a cold pressing process.

As an example, the first polymer and the second polymer may have the same chemical composition.

In some embodiments, when the first polymer and the second polymer are both acrylate copolymers, the first polymer has a Dv50 particle size of 6 µm to 12 µm, and the second polymer has a Dv50 particle size of 0.8 µm to 1.5 µm.

As an example, the first polymer may have a Dv50 particle size of 6 µm, 6.5 µm, 7 µm, 7.5 µm, 8 µm, 8.5 µm, 9 µm, 9.5 µm, 10 µm, 10.5 µm, 11 µm, 11.5 µm, or 12 µm.

As an example, the second polymer may have a Dv50 particle size of 0.8 µm, 0.9 µm, 1.0 µm, 1.1 µm, 1.2 µm, 1.3 µm, 1.4 µm, or 1.5 µm.

When the Dv50 particle sizes of the first polymer and the second polymer are within the above ranges, the second polymer having a small particle size can better fill the voids of the first polymer having a large particle size, the compounding effect of the first polymer and the second polymer is good, and the overall particle size of the polymer after mixing is relatively moderate, such that the stress rebound and the blockage of the pores of the base film after the cold pressing or hot pressing process can be effectively reduced. Dv50 particle size means that in the sample particles, 50% of the total volume of particles have a particle size greater than this value, the other 50% of the total volume of particles have a particle size smaller than this value. Dv50 can represent the median particle size of the sample.

The volume particle size distribution Dv50 of the polymer can be measured using methods well known in the art. As an example, a Malvern laser particle size analyzer, such as Malvern Mastersizer-3000, is used for characterization test, with reference to GB/T 19077-2016. Specifically, a laser particle size analyzer (Malvern 3000, MasterSizer 3000) is used for test, where the main light source is a helium neon red light source. 1 g of the sample to be tested is added into a clean small beaker, a drop of a surfactant is added, 20 mL of deionized water is added, and the mixture is sonicated at 53 KHz/120 W for 5 min to ensure that the sample is completely dispersed. The laser particle size analyzer is started, and after the light path system is cleaned, the background is tested automatically. The sonicated solution to be tested is stirred to be dispersed uniformly, the solution is put into a sample cell as required, and the measurement of the particle size is started. The measurement results are read from the instrument.

It should be noted that when the polymer includes the first polymer and the second polymer, the peak pattern of the particle size distribution of the polymer will present a double peak, and the peak values of the double peak correspond to the Dv50 particle size of the second polymer (the peak with a small particle size) and the Dv50 particle size of the first polymer (the peak with a large particle size), respectively. In this case, the Dv50 particle size of the polymer is greater than the Dv50 particle size of the second polymer and smaller than the Dv50 particle size of the first polymer.

In some embodiments, when the first polymer and the second polymer are both acrylate copolymers, the polymer has a storage modulus of 100 MPa to 800 MPa.

As an example, the polymer may have a storage modulus of 100 MPa, 200 MPa, 300 MPa, 400 MPa, 500 MPa, 600 MPa, 700 MPa, or 800 MPa.

When the storage modulus of the polymer is within the above range, the stress rebound or blockage of the pore structures of the base film after hot pressing or cold pressing of the polymer can be reduced.

The storage modulus of the polymer can be measured using methods well known in the art. As an example, the polymer is pressed into a specimen with dimensions of 10 mm × 10 mm × 4 mm using a grinding tool, and the storage modulus of the sample is measured using a DMA 8000 from Perkin Elmer (test conditions: single cantilever mode, frequency of 1 Hz, amplitude of 0.5 mm, and temperature of 25 °C).

In some embodiments, the second polymer includes at least one of a polyvinyl fluoride polymer and a polyvinylidene fluoride polymer.

When the second polymer is the above fluorine-containing polymer, the second polymer has good chemical corrosion resistance, high-temperature resistance, and electrochemical stability, thereby improving the overall chemical stability and the high-temperature resistance of the polymer. In addition, since the fluorine-containing polymer has high crystallinity and interface resistance, the fluorine-containing polymer has poor affinity for a liquid electrolytic solution, and the electrolytic solution cannot well wet the second polymer. By mixing the first polymer having good electrolytic solution wettability with the second polymer having poor electrolytic solution wettability, the finally obtained polymer, while having good electrolytic solution wettability, has other advantages of the first polymer and the second polymer.

In some embodiments, the polyvinyl fluoride polymer includes at least one of polytetrafluoroethylene, polychlorotrifluoroethylene, and polyvinyl fluoride. Therefore, the high-temperature resistance and the chemical stability of the polymer can be further improved.

In some embodiments, the polyvinylidene fluoride polymer includes at least one of polyvinylidene fluoride, a vinylidene fluoride-trifluoroethylene copolymer, a vinylidene fluoride-hexafluoropropylene copolymer, a vinylidene fluoride-trifluoroethylene-hexafluoropropylene copolymer, a vinylidene fluoride-hexafluoropropylene-acrylic acid copolymer, and a vinylidene fluoride-hexafluoropropylene-acrylate copolymer. Therefore, the high-temperature resistance and the chemical stability of the polymer can be further improved.

In some embodiments, the polyvinylidene fluoride polymer includes at least one of polyvinylidene fluoride and a vinylidene fluoride-hexafluoropropylene copolymer. Therefore, the high-temperature resistance of the polymer can be further improved.

In some embodiments, when the first polymer is an acrylate copolymer and the second polymer is the above fluorine-containing polymer, the first polymer has a Dv50 particle size of 5 µm to 10 µm, and the second polymer has a Dv50 particle size of 0.5 µm to 4 µm.

As an example, the first polymer may have a Dv50 particle size of 5 µm, 5.5 µm, 6 µm, 6.5 µm, 7 µm, 7.5 µm, 8 µm, 8.5 µm, 9 µm, 9.5 µm, or 10 µm.

As an example, the second polymer may have a Dv50 particle size of 0.5 µm, 1 µm, 1.5 µm, 2 µm, 2.5 µm, 3 µm, 3.5 µm, or 4 µm.

When the Dv50 particle sizes of the first polymer and the second polymer are within the above ranges, the second polymer having a small particle size can better fill the voids of the first polymer having a large particle size, the compounding effect of the first polymer and the second polymer is good, and the overall particle size of the polymer after mixing is relatively moderate, such that the stress rebound and the blockage of the pores of the base film after the cold pressing or hot pressing process can be effectively reduced.

It should be noted that when the polymer includes the first polymer and the second polymer, the peak pattern of the particle size distribution of the polymer will present a double peak, and the peak values of the double peak correspond to the Dv50 particle size of the second polymer (the peak with a small particle size) and the Dv50 particle size of the first polymer (the peak with a large particle size), respectively. In this case, the Dv50 particle size of the polymer is greater than the Dv50 particle size of the second polymer and smaller than the Dv50 particle size of the first polymer.

In some embodiments, the first polymer in the polymer has a mass fraction of 50% to 90%, and the second polymer in the polymer has a mass fraction of 10% to 50%. Therefore, the polymer has good bonding performance and high-temperature resistance.

In some embodiments, the polymer has a storage modulus of 300 MPa to 1500 MPa.

As an example, the polymer may have a storage modulus of 300 MPa, 400 MPa, 500 MPa, 600 MPa, 700 MPa, 800 MPa, 900 MPa, 1000 MPa, 1100 MPa, 1200 MPa, 1300 MPa, 1400 MPa, or 1500 MPa.

Compared with the acrylate copolymer, the polyvinyl fluoride polymer and the polyvinylidene fluoride polymer have a high modulus while having a small particle size. By compounding the first polymer and the second polymer reasonably, the overall modulus of the polymer can be controlled within an appropriate range, such that the stress rebound or blockage of the pore structures of the base film after hot pressing or cold pressing of the polymer can be reduced.

As an example, the first polymer in the polymer has a mass fraction of 50%, 55%, 60%, 65%, 70%, 75%, 80%, 85%, or 90%.

As an example, the second polymer in the polymer has a mass fraction of 10%, 15%, 20%, 25%, 30%, 35%, 40%, 45%, or 50%.

When the mass fractions of the first polymer and the second polymer in the polymer are within the above ranges, the particle size of the first polymer is large, and a good mechanical linkage effect can be achieved between a large amount of the first polymer and the surface layer structure of the electrode plate, such that the battery has good hardness and internal adhesion. At the same time, an appropriate amount of the second polymer can fully fill the voids of the first polymer having a large particle size, such that the number of effective contact sites per unit area between the separator and the electrode plate is increased, and the adhesion is improved.

In some embodiments, the above acrylate copolymer may be obtained by an emulsion polymerization method. Specifically, constituent monomers of the acrylate copolymer, an initiator, and an emulsifier may be mixed to obtain a mixture, the mixture undergoes a polymerization reaction to obtain a polymer emulsion, and the polymer emulsion is granulated to obtain the acrylate copolymer. The monomers of the acrylate copolymer may include the above first monomer, the second monomer, and the third monomer, and a mass ratio of the first monomer, the second monomer, and the third monomer is 100:(10 to 60):(5 to 20).

In some embodiments, when the second polymer is at least one of a polyvinyl fluoride polymer and a polyvinylidene fluoride polymer, the second polymer may be obtained by an emulsion polymerization method. Specifically, constituent monomers of the polymer, an initiator, and an emulsifier may be mixed to obtain a mixture, the mixture undergoes a polymerization reaction to obtain a polymer emulsion, and the polymer emulsion is subjected to granulation treatment to obtain the second polymer.

As an example, when the second polymer is polyvinylidene fluoride, the constituent monomers of the second polymer are mainly VDF (vinylidene fluoride) monomers; when the second polymer is a vinylidene fluoride-hexafluoropropylene copolymer, the constituent monomers of the second polymer are VDF monomers and HFP (hexafluoropropylene) monomers, and a mass ratio of the VDF monomers and the HFP monomers is (50:50) to (80:20).

The particle size of the polymer beads in the emulsion polymer is usually nanoscale. If the base film is directly blade-coated with the emulsion polymer, pore blockage, insufficient bonding force, or the like may occur due to the excessively small particle size of the polymer beads. When a polymer material is synthesized by emulsion polymerization, a granular polymer material can be obtained by granulation treatment, which is beneficial to obtaining a polymer with a large particle size.

In some embodiments, the granulation treatment includes airflow spray drying. Specifically, airflow spray coating drying includes two-fluid spray drying.

The two-fluid spray drying means that a polymer emulsion and a gas pass through a two-fluid nozzle, the fluid is sprayed out by using a high-speed airflow to form mist-like or droplet-like liquid particles, moisture is instantly gasified and evaporated by using a hot airflow in a drying tower, and then discharged from the drying tower body by an exhaust and dust removal system, and a dry powder product falls to the bottom of the tower.

The working principle of the two-fluid spray drying can be divided into two parts: an airflow part and a liquid part. The airflow part means that the airflow is accelerated to a high speed by compressed air or other gases, and then sprayed out through the outlet of the nozzle. At the outlet of the nozzle, the airflow forms a high-speed airflow beam, and the airflow beam enables the polymer emulsion to be sprayed out. The liquid part means that the polymer emulsion passes through the liquid outlet of the nozzle and is sprayed into the airflow beam, during which the polymer emulsion is sheared into small particles to form mist-like or droplet-like droplets.

As an example, when the first polymer and the second polymer are both acrylate copolymers, the two-fluid spray drying parameters of the polymer emulsion of the first polymer are as follows: the air pressure for the two-fluid spray drying is 0.1 MPa to 30 MPa, and the hydraulic pressure for the two-fluid spray drying is 0.1 MPa to 20 MPa; and the two-fluid spray drying parameters of the polymer emulsion of the second polymer are as follows: the air pressure for the two-fluid spray drying is 10 MPa to 50 MPa, and the hydraulic pressure for the two-fluid spray drying is 0.1 MPa to 20 MPa.

As an example, when the first polymer is an acrylate copolymer and the second polymer is at least one of a polyvinyl fluoride polymer and a polyvinylidene fluoride polymer, the two-fluid spray drying parameters of the polymer emulsion of the first polymer are as follows: the air pressure for the two-fluid spray drying is 0.1 MPa to 30 MPa, and the hydraulic pressure for the two-fluid spray drying is 0.1 MPa to 20 MPa; and the two-fluid spray drying parameters of the polymer emulsion of the second polymer are as follows: the air pressure for the two-fluid spray drying is 10 MPa to 50 MPa, and the hydraulic pressure for the two-fluid spray drying is 0.1 MPa to 20 MPa.

In some embodiments, powders of the first polymer and the second polymer may be prepared separately by granulation treatment and then mixed to obtain the above polymer, or may be mixed when the binder slurry is prepared.

In a second aspect of the present application, the present application provides a separator. The separator includes the above polymer. Therefore, the separator has all the features and advantages of the above polymer, which will not be repeated herein.

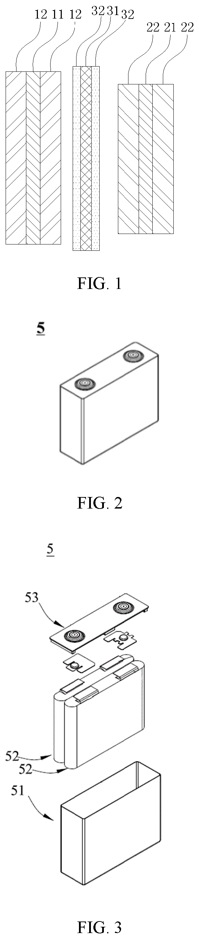

In some embodiments, referring to FIG. 1, the separator may include a base film 31 and a polymer 32 located on at least one side of the base film 31. In some other embodiments, the polymer 32 may be located on two opposite side surfaces of the base film 31.

In some embodiments, the base film may include at least one of polyethylene, polypropylene, polyvinylidene fluoride, polytetrafluoroethylene, and non-woven fabric.

By using the base film made of the above materials, the adhesive force of the polymer on the base film can be effectively improved, thereby improving the structural stability of the separator.

In a third aspect of the present application, the present application provides a battery. The battery includes the above separator. Therefore, the battery has all the features and advantages of the above separator, which will not be repeated herein.

During the charging and discharging process of the battery, active ions are intercalated and deintercalated back and forth between the positive electrode plate and the negative electrode plate. The electrolyte conducts active ions between the positive electrode plate and the negative electrode plate. The separator is disposed between the positive electrode plate and the negative electrode plate to primarily prevent the positive and negative electrodes of the battery from short-circuiting while allowing the passage of ions.

### [Positive Electrode Plate]

The positive electrode plate includes a positive electrode current collector 21 and a positive electrode active material layer 22 disposed on at least one side surface of the positive electrode current collector 21, and the positive electrode active material layer 22 includes a positive electrode active material.

As an example, referring to FIG. 3, the positive electrode current collector 21 is provided with two surfaces opposite to each other in a thickness direction thereof, and the positive electrode active material layer 22 is disposed on either or both of the two opposite surfaces of the positive electrode current collector 21.

In some embodiments, a metal foil or a composite current collector may be used as the positive electrode current collector. For example, as the metal foil, an aluminum foil may be used. The composite current collector may include a polymer material base layer and a metal layer formed on at least one side surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene (PP), polyethylene terephthalate (PET), polybutylene terephthalate (PBT), polystyrene (PS), and polyethylene (PE)).

In some embodiments, when the battery is a lithium-ion battery, a positive electrode active material for use in lithium-ion batteries well known in the art may be used as the positive electrode active material.

As an example, the positive electrode active material may include at least one of the following materials: a lithium-containing phosphate with an olivine structure, a lithium transition metal oxide, and respective modified compounds thereof. However, the present application is not limited to these materials, and other conventional materials that can be used as positive electrode active materials for the battery may also be used. These positive electrode active materials may be used alone or in combination of two or more. The lithium transition metal oxide may include, but is not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.8}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. The modified compounds of the materials described above may be obtained by doping modification and/or surface-coating modification of the materials.

The battery, during the charging and discharging process, undergoes deintercalation and consumption of Li, and the molar content of Li varies when the battery is discharged to different states. In the enumeration related to the positive electrode active material in the present application, the molar content of Li is in an initial state in the material, i.e., a state before the material is added, and when the positive electrode active material is applied to a battery system, the molar content of Li varies after charging and discharging cycles.

In some embodiments, when the battery is a sodium-ion battery, a positive electrode active material for use in sodium-ion batteries well known in the art may be used as the positive electrode active material.

As an example, the positive electrode active material may include at least one of the following materials: a sodium transition metal oxide, a polyanionic compound, a Prussian blue sodium compound, and respective modified compounds thereof. However, the present application is not limited to these materials, and other conventional materials that can be used as positive electrode active materials for the battery may also be used. The modified compounds of the materials described above may be obtained by doping modification and/or surface-coating modification of the materials.

In some embodiments, the transition metal in the sodium transition metal oxide may be at least one of Ti, V, Mn, Co, Ni, Fe, Zn, V, Zr, Ce, Cr, and Cu. The chemical formula of the sodium transition metal oxide may satisfy NaₓMO₂, where M includes at least one of Ti, V, Mn, Co, Ni, Fe, Zn, V, Zr, Ce, Cr, and Cu, and 0 < x ≤ 1.

In some embodiments, the polyanionic compound may be a class of compounds having sodium ions, transition metal ions, and tetrahedral (YO₄)ⁿ⁻ anion units. The transition metal may include at least one of Mn, Fe, Ni, Co, Cr, Cu, Ti, Zn, V, Zr, and Ce; Y may include at least one of P, S, and Si; and n represents the valence state of (YO₄)ⁿ⁻.

In some embodiments, the polyanionic compound may also be a class of compounds having sodium ions, transition metal ions, tetrahedral (YO₄)ⁿ⁻ anion units, and halide anions. The transition metal may include at least one of Mn, Fe, Ni, Co, Cr, Cu, Ti, Zn, V, Zr, and Ce; Y may include at least one of P, S, and Si, and n represents the valence state of (YO₄)ⁿ⁻; and the halogen may include at least one of F, Cl, and Br.

In some embodiments, the polyanionic compound may also be a class of compounds having sodium ions, tetrahedral (YO₄)ⁿ⁻ anion units, polyhedral units (ZO_{y})^{m+}, and optionally halide anions. M may include at least one of Mn, Fe, Ni, Co, Cr, Cu, Ti, Zn, V, Zr, and Ce, Y may include at least one of P, S, and Si, n represents the valence state of (YO₄)ⁿ⁻, Z represents a transition metal, m represents the valence state of (ZO_{y})^{m+}, and the halogen may include at least one of F, Cl, and Br.

As an example, the polyanionic compound may satisfy at least one of the chemical formulas: NaFePO₄, Na₃V₂(PO₄)₃ (sodium vanadium phosphate, referred to as NVP), Na₄Fe₃(PO₄)₂(P₂O₇), NaM'PO₄F (M' includes at least one of V, Fe, Mn, and Ni), and Na₃(VO_{y})₂(PO₄)₂F_{3-2y} (0 ≤ y ≤ 1).

In some embodiments, the Prussian blue compound may be a class of compounds having sodium ions, transition metal ions, and cyanide ions (CN⁻). The transition metal may include at least one of Mn, Fe, Ni, Co, Cr, Cu, Ti, Zn, V, Zr, and Ce.

As an example, the Prussian blue compound may satisfy the chemical formula NaₐMe_{b}Me'_{c}(CN)₆, where Me and Me' each independently include at least one of Ni, Cu, Fe, Mn, Co, and Zn, 0 < a ≤ 2, 0 < b < 1, and 0 < c < 1.

The battery, during the charging and discharging process, undergoes deintercalation and consumption of Na, and the molar content of Na varies when the battery is discharged to different states. In the enumeration related to the positive electrode active material in the present application, the molar content of Na is in an initial state of the material, i.e., a state before the material is added, and when the positive electrode active material is applied to a battery system, the molar content of Na varies after charging and discharging cycles.

In the enumeration related to the positive electrode active material in the present application, the molar content of O is only a theoretical value. The molar content of oxygen may vary due to oxygen release from the crystal lattice, and actually, the molar content of O will fluctuate.

In some embodiments, the positive electrode active material layer further optionally includes a binder.

As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer further optionally includes a conductive agent.

As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate includes a negative electrode current collector 11 and a negative electrode active material layer 12 disposed on at least one side surface of the negative electrode current collector 11, and the negative electrode active material layer 12 includes a negative electrode active material.

As an example, the negative electrode current collector 11 is provided with two surfaces opposite to each other in the thickness direction thereof, and the negative electrode active material layer 12 is disposed on either or both of the two opposite surfaces of the negative electrode current collector 11.

In some embodiments, a metal foil or a composite current collector may be used as the negative electrode current collector. For example, as the metal foil, a copper foil may be used. The composite current collector may include a polymer material base layer and a metal layer formed on at least one side surface of the polymer material substrate. The composite current collector may be formed by forming a metal material (copper, copper alloy, nickel, nickel alloy, titanium, titanium alloy, silver, silver alloy, and the like) on a polymer material substrate (such as a substrate made of polypropylene (PP), polyethylene terephthalate (PET), polybutylene terephthalate (PBT), polystyrene (PS), and polyethylene (PE)).

In some embodiments, a negative electrode active material for use in batteries well known in the art may be used as the negative electrode active material. As an example, the negative electrode active material may include at least one of the following materials: artificial graphite, natural graphite, soft carbon, hard carbon, a silicon-based material, a tin-based material, and the like. The silicon-based material includes at least one of elemental silicon, a silicon-oxygen compound, a silicon-carbon composite, a silicon-nitrogen composite, and a silicon alloy. The tin-based material includes at least one of elemental tin, a tin-oxygen compound, and a tin alloy. However, the present application is not limited to these materials, and other conventional materials that can be used as negative electrode active materials for the battery may also be used. These negative electrode active materials may be used alone or in combination of two or more.

In some embodiments, the negative electrode active material layer further optionally includes a binder.

As an example, the binder in the negative electrode active material layer may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent.

As an example, the conductive agent includes at least one of superconducting carbon, acetylene black, carbon black, Ketjen black, a carbon dot, a carbon nanotube, graphene, and a carbon nanofiber.

In some embodiments, the negative electrode active material layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

### [Electrolyte]

The electrolyte conducts ions between the positive electrode plate and the negative electrode plate. The present application does not specifically limit the type of the electrolyte, which can be selected according to requirements. For example, the electrolyte may be liquid, gel, or all solid.

In some embodiments, the electrolyte is an electrolytic solution. The electrolytic solution includes an electrolyte salt and a solvent.

In some embodiments, the electrolyte salt includes at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

In some embodiments, the positive electrode plate, the negative electrode plate, and the separator may be manufactured into an electrode assembly through a winding process or a stacking process.

In some embodiments, the battery may include an outer packaging. The outer packaging may be configured to package the electrode assembly and electrolyte described above.

In some embodiments, the outer packaging of the battery may be a hard shell, such as a hard plastic shell, an aluminum shell, or a steel shell. The outer packaging of the battery may also be a soft pack, such as a pouch-type soft pack. The soft pack may be made of plastic, and examples of the plastic may include polypropylene, polybutylene terephthalate, polybutylene succinate, and the like.

In some embodiments, the battery may include at least one of a battery cell, a battery module, and a battery pack.

The present application does not particularly limit the shape of the battery, and it may have a cylindrical shape, a prismatic shape, or any other shape. For example, FIG. 2 shows a battery cell 5 having a prismatic structure as one example.

In some embodiments, referring to FIG. 3, the outer packaging may include a housing 51 and a top cover assembly 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the top cover assembly 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution infiltrates into the electrode assembly 52. The number of the electrode assembly 52 included in the battery cell 5 may be one or more, and those skilled in the art can select the number according to specific and actual requirements.

In some embodiments, the battery cell may be assembled into a battery module. The number of battery cells included in the battery module may be one or more, and the specific number may be selected by those skilled in the art based on the use and capacity of the battery module.

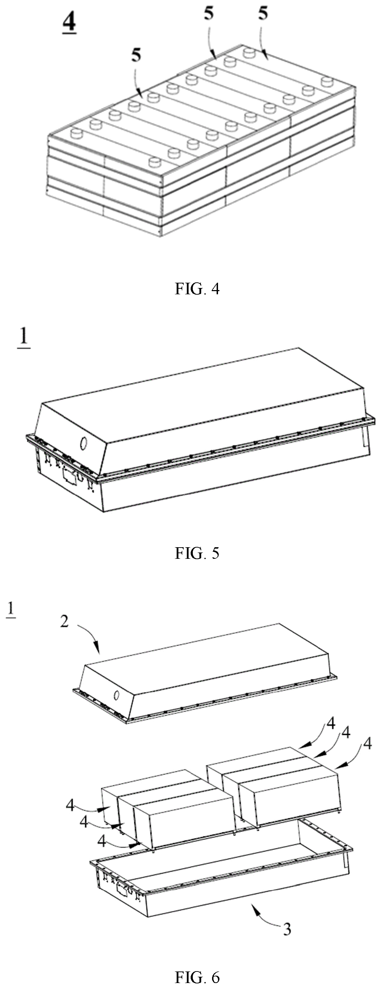

FIG. 4 shows a battery module 4 as one example. In the battery module 4, a plurality of battery cells 5 may be sequentially disposed in the length direction of the battery module 4. Certainly, the arrangement may also be in any other manner. Further, the plurality of battery cells 5 may be fixed by fasteners.

Optionally, the battery module 4 may further include a shell having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

FIGs. 5 and 6 show a battery pack 1 as one example. The battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In a fourth aspect of the present application, the present application provides an electric device. The electric device includes the above battery. Therefore, the electric device has all the features and advantages of the above battery, which will not be repeated herein.

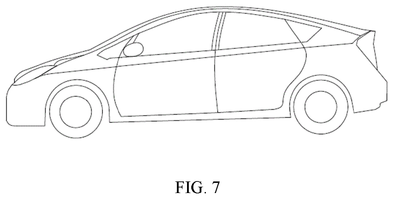

The electric device may include at least one of the battery cell, the battery module, or the battery pack provided in the present application. The battery cell, the battery module, or the battery pack can be used as a power source for the electric device, and they can also be used as an energy storage unit for the electric device. The electric device may include a mobile device (e.g., a mobile phone or a laptop computer), an electric vehicle (referring to FIG. 7, e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As for the electric device, a battery cell, a battery module, or a battery pack may be selected according to usage requirements thereof.

The solutions of the present application are described below through specific examples. It should be noted that the following examples are only used to illustrate the present application and should not be construed as limiting the scope of the present application. The examples without techniques or conditions specified therein are implemented according to techniques or conditions described in the literature in the art or according to product instructions. Reagents or instruments used herein without specified manufacturers are all commercially available conventional products.

### Example 1

### 1. Preparation of polymer:

### Preparation of first polymer:

(1) Synthesis of polymer emulsion: the first monomer ethyl acrylate, the second monomer acrylic acid, and the third monomer acrylamide were weighed according to the mass ratio of the first monomer, the second monomer, and the third monomer of 100:30:10, with a total amount of 1000 g. The monomers were uniformly mixed. 1000 g of the monomer mixture, 20 g of an emulsifier sodium dodecylbenzenesulfonate, 5 g of an initiator potassium persulfate, and 1200 g of deionized water were added into a 5 L four-neck flask provided with a mechanical stirrer, a thermometer, and a condensing pipe, and the mixture was stirred at a high speed for emulsification for 30 min. In a nitrogen atmosphere, the system was heated to 80 °C for reaction for 4 h, cooled to a temperature below 40 °C, adjusted to a neutral pH, filtered, and discharged to obtain the polymer emulsion.
(2) The polymer emulsion was subjected to a spray drying process to prepare a binder for a separator, and the conditions of a two-fluid spray drying process were: an air inlet temperature of 110 °C, an air outlet temperature of 50 °C, an air pressure of 5 MPa, and a hydraulic pressure of 3 MPa.

### Preparation of second polymer:

The second polymer and the first polymer adopted the same polymer emulsion, but the conditions of the two-fluid spray drying process were different. The conditions of the two-fluid spray drying process for the second polymer were: an air inlet temperature of 110 °C, an air outlet temperature of 50 °C, an air pressure of 15 MPa, and a hydraulic pressure of 5.5 MPa.

### 2. Preparation of battery

### (1) Preparation of separator

A commercially available PE microporous thin film (from Dongguan Advanced Electronic Technology Co., Ltd.) having a thickness of 7 µm and an average pore size of 80 nm was used as a base film. The first polymer and the second polymer prepared as described above were used as a binder in a mass ratio of 80:20, and stirred and uniformly mixed in deionized water to obtain a binder slurry (with a solid content of 20%). The binder slurry was sprayed on two surfaces of the base film, the base film was dried to remove the solvent, and the application density of the polymer on the base film was 1.5 g/m², so as to obtain the separator.

### (2) Preparation of positive electrode plate

Polyvinylidene fluoride (PVDF), lithium iron phosphate (LFP), a conductive agent carbon black, and N-methylpyrrolidone (NMP) were fully stirred and uniformly mixed in a mass ratio of 1.2:58.38:0.42:40 to prepare a positive electrode slurry. The positive electrode slurry was uniformly applied to a positive electrode current collector aluminum foil at a loading capacity of 200 g/m², and the aluminum foil was then subjected to drying, cold pressing, and slitting to obtain the positive electrode plate.

### (3) Preparation of negative electrode plate

Artificial graphite, a conductive agent acetylene black, a binder styrene-butadiene rubber (SBR), and a thickener sodium carboxymethylcellulose (CMC-Na) were added into deionized water in a mass ratio of 96.2: 1.0: 1.6: 1.2, and the mixture was fully stirred and uniformly mixed to prepare a negative electrode slurry (with a solid content of 63%). The negative electrode slurry was applied to a negative electrode current collector copper foil at a loading capacity of 98 g/m², and the copper foil was then subjected to drying, cold pressing, and slitting to obtain the negative electrode plate.

### (4) Preparation of electrolytic solution

Ethylene carbonate (EC), ethyl methyl carbonate (EMC), and diethyl carbonate (DEC) were mixed in a volume ratio of 1:1:1 at 25 °C to obtain a mixed solvent, and then LiPF₆ was dissolved in the mixed solvent to obtain the electrolytic solution, where the concentration of LiPF₆ was 1 mol/L.

### (5) Assembly of battery

The positive electrode plate, the separator, and the negative electrode plate were stacked in sequence and wound, and were subjected to cold pressing molding (the separator was bonded to the electrode plate in the process) to obtain a cell; and the cell was put into an outer packaging, the prepared electrolytic solution was added, and packaging, standing, formation, aging, and other procedures were conducted to obtain the battery.

Reference is made to Table 1 for differences in other embodiments and comparative examples from Example 1. The mass ratio of the first polymer to the second polymer in Examples 2 to 3 is different from that in Example 1; the particle size of the first polymer in Examples 4 to 5 is different from that in Example 1; the particle size of the second polymer in Examples 6 to 7 is different from that in Example 1; the second polymer in Examples 8 to 14 is polyvinylidene fluoride, where the mass ratio of the first polymer to the second polymer in Examples 9 to 10 is different from that in Example 8, the particle size of the first polymer in Examples 11 to 12 is different from that in Example 8, and the particle size of the second polymer in Examples 13 to 14 is different from that in Example 8; in Comparative Example 1, only the first polymer in Example 1 is used as a binder; in Comparative Example 2, only the second polymer in Example 1 is used as a binder; and in Comparative Example 3, polyvinylidene fluoride is used as a binder.

**Table 1**

| No. | First monome r | Second monom er | Third monomer | Mass ratio of first monom er, second monom er, and third monom er | Preparation process of first polymer | | Substance of second polymer | Preparation process of second polymer | | Mass ratio of first polymer to second polymer |
|---|---|---|---|---|---|---|---|---|---|---|
| | | | | | Two-fluid air pressure/ MPa | Two-fluid hydraulic pressure/ MPa | | Two-fluid air pressure / MPa | Two-fluid hydrauli c pressure / MPa | |
| Example 1 | Ethyl acrylate | Acrylic acid | Acrylami de | 100:30: 10 | 5 | 3 | Same as first polymer | 15 | 5.5 | 50:50 |
| Example 2 | Ethyl acrylate | Acrylic acid | Acrylami de | 100:30: 10 | 5 | 3 | Same as first polymer | 15 | 5.5 | 90:10 |
| Example 3 | Ethyl acrylate | Acrylic acid | Acrylami de | 100:30: 10 | 5 | 3 | Same as first polymer | 15 | 5.5 | 70:30 |
| Example 4 | Ethyl acrylate | Acrylic acid | Acrylami de | 100:30: 10 | 7 | 2.5 | Same as first polymer | 15 | 5.5 | 70:30 |
| Example 5 | Ethyl acrylate | Acrylic acid | Acrylami de | 100:30: 10 | 3 | 2 | Same as first polymer | 15 | 5.5 | 70:30 |
| Example 6 | Ethyl acrylate | Acrylic acid | Acrylami de | 100:30: 10 | 5 | 3 | Same as first polymer | 20 | 5 | 70:30 |
| Example 7 | Ethyl acrylate | Acrylic acid | Acrylami de | 100:30: 10 | 5 | 3 | Same as first polymer | 16 | 7 | 70:30 |
| Example 8 | Ethyl acrylate | Acrylic acid | Acrylami de | 100:30: 10 | 5 | 3 | Polyvinylide ne fluoride | 16 | 7 | 50:50 |
| Example 9 | Ethyl acrylate | Acrylic acid | Acrylami de | 100:30: 10 | 5 | 3 | Polyvinylide ne fluoride | 16 | 7 | 90:10 |
| Example 10 | Ethyl acrylate | Acrylic acid | Acrylami de | 100:30: 10 | 5 | 3 | Polyvinylide ne fluoride | 16 | 7 | 70:30 |
| Example 11 | Ethyl acrylate | Acrylic acid | Acrylami de | 100:30: 10 | 8 | 3.2 | Polyvinylide ne fluoride | 16 | 7 | 70:30 |
| Example 12 | Ethyl acrylate | Acrylic acid | Acrylami de | 100:30: 10 | 4.5 | 2.1 | Polyvinylide ne fluoride | 16 | 7 | 70:30 |
| Example 13 | Ethyl acrylate | Acrylic acid | Acrylami de | 100:30: 10 | 5 | 3 | Polyvinylide ne fluoride | 23 | 6.5 | 70:30 |
| Example 14 | Ethyl acrylate | Acrylic acid | Acrylami de | 100:30: 10 | 5 | 3 | Polyvinylide ne fluoride | 11 | 5 | 70:30 |
| Comparativ e Example 1 | Ethyl acrylate | Acrylic acid | Acrylami de | 100:30: 10 | 5 | 3 | / | / | / | / |
| Comparativ e Example 2 | / | / | / | / | / | / | Same as the first polymer in Example 1 | 15 | 5.5 | / |
| Comparativ e Example 3 | / | / | / | / | / | / | Polyvinylide ne fluoride | 16 | 7 | / |

The first polymer and the second polymer in the above examples and comparative examples were subjected to the following tests. The test methods are as follows, and the test results are shown in Table 2.

A laser particle size analyzer (Malvern 3000, MasterSizer 3000) was used for test, where the main light source was a helium neon red light source. 1 g of the sample to be tested was added into a clean small beaker, a drop of a surfactant was added, 20 mL of deionized water was added, and the mixture was sonicated at 53 KHz/120 W for 5 min to ensure that the sample was completely dispersed. The laser particle size analyzer was started, and after the light path system was cleaned, the background was tested automatically. The sonicated solution to be tested was stirred to be dispersed uniformly, the solution was put into a sample cell as required, and the measurement of the particle size was started. The measurement results were read from the instrument.

The polymers in the above examples and comparative examples were subjected to the following tests. The mass ratio of the first polymer to the second polymer in the polymer was 80:20. The test results are shown in Table 2, and the test methods are as follows.

Swelling property test: (1) Dissolution: 10 g of polymer powder and 90 g of N-methylpyrrolidone (NMP) were mixed and stirred for dissolution at 40 °C for 5 h to obtain a polymer adhesive solution; (2) Preparation of adhesive film: The stirred polymer adhesive solution was poured into a polytetrafluoroethylene drying tray, and baked at 70 °C for 7 days to obtain a dry adhesive film; and (3) Swelling degree test: About 1 g of the dry adhesive film with a thickness of 2 mm was taken, an accurate mass of the adhesive film was weighed and recorded as M₁, the adhesive film was immersed in an electrolytic solution, and the mixture was baked in an oven at 70 °C for 24 h; the sample piece was taken out and allowed to stand for 1 h, and then wiped clean; the mass M₂ of the sample piece was weighed, and the swelling degree of the polymer was calculated according to the following formula: mass swelling degree = (M₂ - M₁)/M₁ × 100%. The electrolytic solution was prepared as follows: Ethylene carbonate (EC), ethyl methyl carbonate (EMC), and diethyl carbonate (DEC) were mixed in a mass ratio of 3:5:2 to obtain an electrolyte solvent, and the electrolyte solvent and lithium hexafluorophosphate (LiPF₆) were mixed to prepare an electrolyte solution with a molar concentration of LiPF₆ of 1 mol/L.

Tap density test: Tap density refers to the mass per unit volume of a powder measured after the powder in a container is tapped under specified conditions. In the formula Pt = (m - m₀)/V, Pt is the tap density of a powder in g/cm³, m is the total mass of a measuring cylinder and a sample in g, m₀ is the weight of the measuring cylinder in g, and V is the tap volume of the powder in cm³.

For the specific test method, reference was made to the national standards GB/T 5162-2006 "Metallic Powders - Determination of Tap Density" and GBT 24533-2009 "Graphite Negative Electrode Materials for Lithium-Ion Battery". A graduated measuring cylinder filled with a powder was fixed on a mechanical vibration device, the mechanical vibration device was driven by a motor to vibrate vertically up and down, and the powder was gradually tapped; when a set number of vibration times was reached, the vibration was stopped, and the volume of the graduated measuring cylinder was read; and the density of the tapped powder was calculated according to the density definition: mass divided by volume.

Storage modulus test: The polymer was pressed into a specimen with dimensions of 10 mm × 10 mm × 4 mm using a grinding tool, and the storage modulus of the sample was measured using a DMA 8000 from Perkin Elmer (test conditions: single cantilever mode, frequency of 1 Hz, amplitude of 0.5 mm, and temperature of 25 °C).

The batteries in the above examples and comparative examples were subjected to the following tests. The test results are shown in Table 2, and the test methods are as follows.

Cold-pressing bonding test: The negative electrode plate and the separator were overlapped together and placed on a hot press, and parameters of the hot press were set as follows: the temperature was 25 °C, the pressure was 7 t, and the time was 15 s. A pressure was applied to prepare a bonded separator/negative electrode plate sample; the separator/electrode plate sample was cut into 150 mm × 20 mm rectangular sample strips. One surface of the negative electrode plate of the rectangular sample strip was adhered to a steel plate by a double-sided adhesive tape, and the separator and the negative electrode plate were separated at one end of the rectangular sample strip by 2 cm along the length direction to prepare a test sample. The steel plate was held horizontally and fixed by the lower clamp of a universal tester (model CTM2100 from Xieqiang Instrument Manufacturing (Shanghai) Co., Ltd.), and the peeled end of the separator described above was fixed by the upper clamp of the universal tester and connected to a tensile machine. Test conditions were set as follows: the tensile rate was 20 mm/min, and the horizontal pull was 10 cm. After the tension was stable, the tension value was recorded, and the bonding force between the separator and the negative electrode plate was obtained according to the ratio of the tension value to the width of the sample.

### Large clamp cycle performance test:

A clamp force of 10000 N was applied to the outside of the cell, and a cycle test was performed in this state. The test steps were as follows: At 25 °C, the battery prepared in the example was charged to 3.65 V at a 1/3C constant current, then charged to 0.05C at a 3.65V constant voltage, allowed to stand for 5 min, and then discharged to 2.0 V at 1/3C; the obtained discharge capacity was marked as the initial capacity C₀; the steps were repeated for the same battery, and the discharge capacity Cₙ of the battery after the n^{th} cycle was recorded; and the battery capacity retention rate after each cycle Pₙ = (Cₙ/C₀) × 100%. That is, the difference in the cycle performance may be reflected by the capacity retention rate of the battery after 500 cycles.

### Cell hardness test:

The cell was placed on a horizontal bench. The middle hollow part with a width of 12 cm was fixed, the cell was kept naturally flat, and the amplitude of the deviation of the central position of the cell from the reference horizontal line was measured to evaluate the hardness of the cell. A greater amplitude of the deviation of the center position of the cell from the reference horizontal line indicates a lower cell hardness.

**Table 2**

| No. | Dv50 particle size of first polymer/µm | Dv50 particle size of second polymer/µm | Polymer | | | Battery | | |
|---|---|---|---|---|---|---|---|---|
| | | | Mass swelling degree/% | Tap density g/cm³ | Storage modulus/MPa | Bonding force of separator to negative electrode plate/(N/m) | Center amplitude deviation of cell/mm | Large clamp cycle P₅₀₀/% |
| Example 1 | 7.5 | 1.2 | 65 | 1.18 | 526 | 5.2 | 0 | 96.1 |
| Example 2 | 7.5 | 1.2 | 72 | 1.12 | 512 | 5.6 | 0 | 95.6 |
| Example 3 | 7.5 | 1.2 | 68 | 1.16 | 535 | 4.8 | 0 | 95.4 |
| Example 4 | 6 | 1.2 | 71 | 1.14 | 463 | 5.8 | 0 | 95.3 |
| Example 5 | 12 | 1.2 | 71 | 1.15 | 626 | 4.3 | 0 | 95 |
| Example 6 | 7.5 | 0.8 | 66 | 1.16 | 566 | 4.6 | 0 | 94.7 |
| Example 7 | 7.5 | 1.5 | 68 | 1.15 | 527 | 5.1 | 0 | 94.4 |
| Example 8 | 7.5 | 2 | 46 | 1.42 | 1255 | 2.6 | 0 | 94.2 |
| Example 9 | 7.5 | 2 | 53 | 1.19 | 769 | 3.8 | 0 | 94.1 |
| Example 10 | 7.5 | 2 | 41 | 1.36 | 962 | 3.1 | 0 | 93.8 |
| Example 11 | 5 | 2 | 43 | 1.32 | 931 | 3.7 | 0 | 93.5 |
| Example 12 | 10 | 2 | 43 | 1.33 | 937 | 3.5 | 0 | 93.2 |
| Example 13 | 7.5 | 0.5 | 38 | 1.38 | 981 | 2.8 | 0 | 92.6 |
| Example 14 | 7.5 | 4 | 42 | 1.34 | 945 | 3.2 | 0 | 92.1 |
| Comparative Example 1 | 7.5 | / | 82 | 1.11 | 561 | 1.5 | 12 | 83.2 |
| Comparative Example 2 | / | 1.2 | 98 | 1.16 | 625 | 1 | 15 | 80.5 |
| Comparative Example 3 | / | 2 | 76 | 1.73 | 1566 | 1.4 | 12 | 82.3 |

It can be seen from the test results that in Examples 1 to 14, by compounding the large and small particle sizes of the first polymer and the second polymer, the second polymer can fully fill the voids between the first polymers, and the polymer reaches the maximum bulk density. When the above polymer is used as a binder on the surface of the base film, the binder on the separator can better wet the surface layer structure of the electrode plate, such that the polymer as a whole achieves a better embedding effect and has a better bonding performance. At the same time, the second polymer filling the voids between the first polymers can also reduce the stress rebound of the polymer as a whole after pressure application, such that the bonding effect after pressure application is maintained, and the battery has a high hardness and large clamp cycle performance.

In Comparative Example 1, only an acrylate copolymer having a large particle size is used as a binder, the voids between the binders are large, the swelling resistance is poor, the stress rebound of the binder after pressure application is large, and the cell hardness is poor.

In Comparative Example 2, only an acrylate copolymer having a small particle size is used as a binder, the contact sites that the binder can provide are too few, the swelling resistance is poor, and the bonding performance is poor.

In Comparative Example 3, only polyvinylidene fluoride having a small particle size is used as a binder, the storage modulus of the binder is large, the stress rebound of the binder after pressure application is large, and the cell hardness is poor.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A polymer, comprising: a first polymer and a second polymer, wherein a Dv50 particle size of the first polymer is greater than a Dv50 particle size of the second polymer, and the first polymer comprises an acrylate copolymer.

2. The polymer according to claim 1, wherein monomers of the acrylate copolymer comprise a first monomer, a second monomer, and a third monomer, and the monomers of the acrylate copolymer meet at least one of the following conditions:
the first monomer comprises at least one of ethyl acrylate, n-butyl acrylate, n-propyl acrylate, isobutyl acrylate, sec-butyl acrylate, tert-butyl acrylate, cyclohexyl acrylate, isooctyl acrylate, lauryl acrylate, 2-ethylhexyl acrylate, methyl acrylate, methyl methacrylate, ethyl methacrylate, n-butyl methacrylate, 2-ethylhexyl methacrylate, isobornyl methacrylate, lauryl methacrylate, vinyl acetate, trifluoroethyl methacrylate, trimethylolpropane triacrylate, 2-hydroxyethyl acrylate, 2-hydroxypropyl acrylate, 2-hydroxyethyl methacrylate, and 2-hydroxypropyl methacrylate;
the second monomer comprises at least one of acrylonitrile, methacrylonitrile, ethacrylonitrile, acrylic acid, methacrylic acid, crotonic acid, heptenoic acid, itaconic acid, and maleic acid; and
the third monomer comprises at least one of acrylamide, N-hydroxymethyl acrylamide, and N-butoxymethylacrylamide.

3. The polymer according to claim 2, wherein the monomers of the acrylate copolymer meet at least one of the following conditions:
the first monomer comprises at least one of ethyl acrylate, n-butyl acrylate, n-propyl acrylate, isobutyl acrylate, sec-butyl acrylate, tert-butyl acrylate, isooctyl acrylate, methyl acrylate, methyl methacrylate, ethyl methacrylate, n-butyl methacrylate, 2-ethylhexyl methacrylate, and isobornyl methacrylate;
the second monomer comprises at least one of acrylonitrile, methacrylonitrile, acrylic acid, and methacrylic acid; and
the third monomer comprises at least one of acrylamide and N-hydroxymethyl acrylamide.

4. The polymer according to any one of claims 1 to 3, wherein the second polymer comprises an acrylate copolymer.

5. The polymer according to claim 4, wherein the first polymer has a Dv50 particle size of 6 µm to 12 µm, and the second polymer has a Dv50 particle size of 0.8 µm to 1.5 µm.

6. The polymer according to claim 4 or 5, wherein the polymer has a storage modulus of 100 MPa to 800 MPa.

7. The polymer according to any one of claims 1 to 3, wherein the second polymer comprises at least one of a polyvinyl fluoride polymer and a polyvinylidene fluoride polymer.

8. The polymer according to claim 7, wherein the polyvinyl fluoride polymer comprises at least one of polytetrafluoroethylene, polychlorotrifluoroethylene, and polyvinyl fluoride; and/or
the polyvinylidene fluoride polymer comprises at least one of polyvinylidene fluoride, a vinylidene fluoride-trifluoroethylene copolymer, a vinylidene fluoride-hexafluoropropylene copolymer, a vinylidene fluoride-trifluoroethylene-hexafluoropropylene copolymer, a vinylidene fluoride-hexafluoropropylene-acrylic acid copolymer, and a vinylidene fluoride-hexafluoropropylene-acrylate copolymer.

9. The polymer according to claim 7 or 8, wherein the polyvinylidene fluoride polymer comprises at least one of polyvinylidene fluoride and a vinylidene fluoride-hexafluoropropylene copolymer.

10. The polymer according to any one of claims 7 to 9, wherein the first polymer has a Dv50 particle size of 5 µm to 10 µm, and the second polymer has a Dv50 particle size of 0.5 µm to 4 µm.

11. The polymer according to any one of claims 7 to 10, wherein the polymer has a storage modulus of 300 MPa to 1500 MPa.

12. The polymer according to any one of claims 1 to 11, wherein the first polymer in the polymer has a mass fraction of 50% to 90%, and the second polymer in the polymer has a mass fraction of 10% to 50%.

13. A separator, comprising the polymer according to any one of claims 1 to 12.

14. A battery, comprising the separator according to claim 13.

15. An electric device, comprising the battery according to claim 14.
